# EUROPÄISCHE PATENTSCHRIFT

(11) **EP 0 849 102 B1**
(45) Veröffentlichungstag und Bekanntmachung des Hinweises auf die Patenterteilung: **14.03.2001**
(21) Anmeldenummer: 97120982.0
(22) Anmeldetag: 28.11.1997
(51) Int. Cl.: B60C 25/00

(54) **Verfahren und Vorrichtung zum Behandeln eines Scheibenrades eines Kraftfahrzeugrades an einer Reifenmontiermaschine**
Method and device for handling a motor car wheel on a tire mounting machine
Procédé et dispositif pour manier une roue de véhicule automobile sur une machine à monter les pneumatiques

(30) Priorität: 20.12.1996 DE 19653664
(43) Veröffentlichungstag der Anmeldung: 24.06.1998
(73) Patentinhaber: Snap-On Deutschland Holding GmbH, 40822 Mettmann (DE)
(72) Erfinder: Diez, Ulrich, 51580 Reichshof (DE)
(74) Vertreter: Nöth, Heinz, Dipl.-Phys.

(56) Entgegenhaltungen:
- EP-A- 0 001 855

## Beschreibung

Die Erfindung betrifft ein Verfahren und eine Vorrichtung zum Behandeln eines Scheibenrades eines Kraftfahrzeugrades an einer Reifenmontiermaschine, bei dem das Scheibenrad mit Hilfe von Spannelementen an einer Drehvorrichtung festgespannt wird. Ein derartiges Verfahren und eine derartige Vorrichtung sind bekannt (monty-centuro-Prospekt der Firma Hofmann Werkstatt-Technik GmbH, Pfungstadt, Impressum 9402449 01.95 oder monty-Prospekt der Firma Hofmann Werkstatt-Technik GmbH, Pfungstadt, Impressum 9402445 11.94).

Beim Montieren des Luftreifens wird das bloße Scheibenrad an der Reifenmontiermaschine mit Hilfe von Spannelementen befestigt und anschließend unter Zuhilfenahme der an der Montiermaschine vorgesehenen Werkzeuge der Luftreifen auf dem Scheibenrad montiert. Zum Demontieren des Luftreifens vom Scheibenrad wird das aus Luftreifen und Scheibenrad bestehende Kraftfahrzeugrad an der Montiermaschine mit Hilfe derselben Spannelemente befestigt. Durch an der Maschine vorgesehene Demontierwerkzeuge kann dann der Reifen vom Scheibenrad entfernt werden. Die Montier- und Demontierwerkzeuge können materialschonend bei Sonderfelgen aus Leichtmetall z.B. (Aluminium, Magnesium, Titan oder Legierungen davon) zum Einsatz gebracht werden. Das Aufspannen des Rades kann von außen oder von innen geschehen. Beim Aufspannen von außen greifen in Form von Spannbacken ausgebildete Spannelemente an einem der beiden Felgenhörner des Scheibenrades an. Die Spannelemente können in radialer Richtung hierzu bewegt werden. Beim Spannen von innen greifen Spannbacken an der Innenfläche der Felgenschüssel an. Die von außen bzw. von innen angreifenden Spannbacken sind an radial beweglichen Spannarmen bzw. Spannschuhen gelagert. Es ist auch möglich, das Scheibenrad mit Hilfe einer Spannvorrichtung unter Zuhilfenahme von einem oder mehreren Spannkonen in der Mittenöffnung des Scheibenrades festzuspannen. Diese Befestigungsart ist ähnlich der, welche beim Befestigen eines Kraftfahrzeugrades auf einer Hauptwelle einer Auswuchtmaschine angewendet wird. Mit Hilfe einer Halteeinrichtung, die eine Abstützung des Scheibenrades in der Radmitte gewährleistet, kann eine Vorpositionierung des Scheibenrades in der Reifenmontiermaschine vor dem endgültigen Aufspannen des Rades erreicht werden. Die Halteeinrichtung kann tellerförmig und gegebenenfalls gefedert ausgebildet sein.

Zur schonenden Behandlung von insbesondere Leichtmetallfelgen aus Aluminium- oder Magnesiumlegierungen oder dergl. können an den Spannbacken Gummiauflagen oder Kunststoffauflagen vorgesehen sein. Im rauhen Werkstattbetrieb nützen sich diese Gummiauflagen bzw. Kunststoffauflagen ab, so daß insbesondere Leichtmetallfelgen oder auch ein Anstrich auf der Felge beim Spannen beschädigt werden können. Für die Serviceperson ist es in vielen Fällen schwierig, visuell festzustellen, ob ein Scheibenrad aus Leichtmetall oder Stahl vorliegt, da die Anstriche der Scheibenräder in vielen Fällen identisch sind.

Aufgabe der Erfindung ist es daher, ein Verfahren und eine Vorrichtung der eingangs genannten Art zu schaffen, bei denen eine Beschädigung der aufgespannten Felge vermieden wird.

Diese Aufgabe wird beim Verfahren durch die kennzeichnenden Merkmale des Patentanspruches 1 und bei der Vorrichtung durch die kennzeichnenden Merkmale des Patentanspruches 11 gelöst.

Bei der Erfindung wird vor dem Festspannen des Scheibenrades mittels eines Sensors das Scheibenmaterial abgetastet und im Falle eines nicht-ferromagnetischen Materials, insbesondere Aluminium-, Magnesium- oder Titangußlegierung, ein Signal für einen materialschonenden Spannvorgang und/oder Montier- bzw. Demontiervorgang durch einen vom Sensor angesteuerten Signalgeber abgegeben. Durch das Signal für die materialschonenden Arbeitsschritte kann die Serviceperson immer dann, wenn ein Scheibenrad aus Leichtmetall aufzuspannen ist, daran erinnert werden, daß an den Spannelementen das Leichtmetall der Felge schonende Überzüge vorgesehen werden bzw. diese Überzüge auf ihre Funktionstüchtigkeit hin überprüft werden. Ferner werden die materialschonenden Montier- bzw. Demontierwerkzeuge zum Einsatz gebracht. Von der Maschine kann hierzu ein optisches oder akustisches Signal abgegeben werden, welches diese Handhabung empfiehlt. Wenn die Befestigung am Mittenloch des Scheibenrades erfolgt, werden materialschonende Spannmittel zum Einsatz gebracht.

Ferner kann bei Maschinen, die sowohl innen als auch außen spannen, die Antriebsvorrichtung für die Spannelemente in der Weise angesteuert werden, daß ein Spannvorgang innen an der Felgenschüssel dann blockiert wird, wenn vom Sensor ein Leichtmetall als ein Scheibenradmaterial festgestellt worden ist. Der Spannvorgang wird dann so gesteuert, daß die Spannelemente von außen an den Felgenrand angreifen.

Hierbei ist es von Vorteil, daß die Abmessungen des Scheibenrades, insbesondere der Durchmesser der Felgenhörner gemessen wird. Dieser Durchmesser wird zur Steuerung der Bewegung der Spannelemente eingegeben, so daß die Spannelemente zum einem den Felgenhörnern des Scheibenrades entsprechenden Radius bewegt werden, an welchem die Spannelemente mit dem entsprechenden Felgenhorn in Eingriff kommen.

Vor dem Spannen kann das Scheibenrad an einer Halteeinrichtung insbesondere in seiner Mitte abgestützt werden. Die Abtastung des Materials des Scheibenrades kann dann an dem abgestützten Scheibenrad erfolgen.

In bevorzugter Weise kommt ein einfach ausgebildeter Sensor, welcher auf ferromagnetisches Material insbesondere nur auf ferromagnetisches Material anspricht, zur Anwendung. Hierfür sind bekannte induktive Näherungsschalter ("Elektrotechnik" 57, H.24.27, Dezember 1975, Seiten 39 bis 42) einsetzbar.

Es ist auch möglich, andere Sensoren, die beispielsweise galvanisch oder kapazitiv mit dem Scheibenradmaterial gekoppelt werden, einzusetzen. Es genügt, wenn der Sensor auf ferromagnetisches Material reagiert. Aufgrund einer Ja/Nein-Entscheidung, die in einer an den Sensor angeschlossenen Logik enthalten ist, läßt sich dann das für den materialschonenden Spannvorgang erzielte Signal erzeugen. Falls das Scheibenrad aus einem ferromagnetischen Material, insbesondere Stahl besteht, ist dieses Signal nicht erforderlich. Es kann jedoch eine Anzeige durch ein weiteres Signal veranlaßt werden, welches der Serviceperson anzeigt, daß ein Scheibenrad aus Stahl aufgespannt werden soll.

Das für den materialschonenden Spannvorgang erzeugte Signal kann auch in der Weise ausgewertet werden, daß an Stützelementen beispielsweise Spannarmen oder Spannschuhen, mit denen die Spannelemente in Eingriff mit dem Scheibenrad beim Spannen gebracht werden, zusätzliche Spannelemente mit schützenden Überzügen sind. An den bewegungsübertragenden Stützelementen können weitere Spannelemente vorgesehen sein, die dann zum Einsatz gebracht werden, wenn Scheibenräder aus Stahl aufgespannt werden. Auf diese Weise erreicht man eine Schonung der mit den schützenden Überzügen versehenen Spannelemente, so daß diese eine längere Betriebsdauer haben.

Die Materialabtastung kann bereits vor dem Abdrücken der Reifenwülste von den Felgenhörnern durchgeführt werden, wenn beispielsweise ein Demontieren eines auf einem Scheibenrad angeordneten Reifens an der Montiermaschine durchgeführt werden soll. Das Abdrücken erfolgt in aller Regel vor dem Befestigen des Scheibenrades an der Reifenmontiermaschine. Es kann hierzu eine Abdrückschaufel verwendet werden, wobei das Kraftfahrzeugrad gegen eine Anlagefläche, welche an der Außenseite des Gehäuses der Montiermaschine vorgesehen ist, angedrückt wird.

Wenn die Reifenmontiermaschine im Verbund mit einer Auswuchtmaschine z.B. in einer Reifenservicestraße arbeitet, kann die bei der Materialabtastung gewonnene Information über das Scheibenradmaterial ausgewertet werden für das beim Auswuchten des Kraftfahrzeugrades auf der Auswuchtmaschine zu wählende Auswuchtprogramm. Wenn ein nicht-ferromagnetisches Material, insbesondere Leichtmetall aus Aluminium- oder Magnesiumdruckgußlegierung, festgestellt worden ist, kann auf der Auswuchtmaschine ein Auswuchtprogramm für derartige Scheibenräder, bei denen bevorzugt Klebegewichte zum Einsatz kommen, ausgewählt werden. Falls ein ferromagnetisches Material, insbesondere Stahl, für das Scheibenradmaterial festgestellt worden ist, kann auf der Auswuchtmaschine ein Normalprogramm für das Auswuchten ausgewählt werden, wobei bevorzugt Klammergewichte, die an den Felgenhörnern der Felge eingeschlagen werden, zur Anwendung kommen.

Falls an der Montiermaschine unterschiedliche Werkzeuge für den Einsatz bei Stahlfelgen und Leichtmetallfelgen aus Aluminium- bzw. Magnesiumgußlegierung vorhanden sind, kann in den Fällen, in welchen für die Scheibenräder nicht-ferromagnetische Materialien festgestellt worden sind, die Montier- bzw. Demontierwerkzeuge blockiert werden, welche bei der Behandlung von Stahl-Rädern zum Einsatz kommen.

Anhand der Figuren wird an einem Ausführungsbeispiel die Erfindung noch näher erläutert. Es zeigt:
- Fig. 1:: in schematischer Darstellung ein erstes Ausführungsbeispiel und
- Fig. 2:: ein zweites Ausführungsbeispiel.

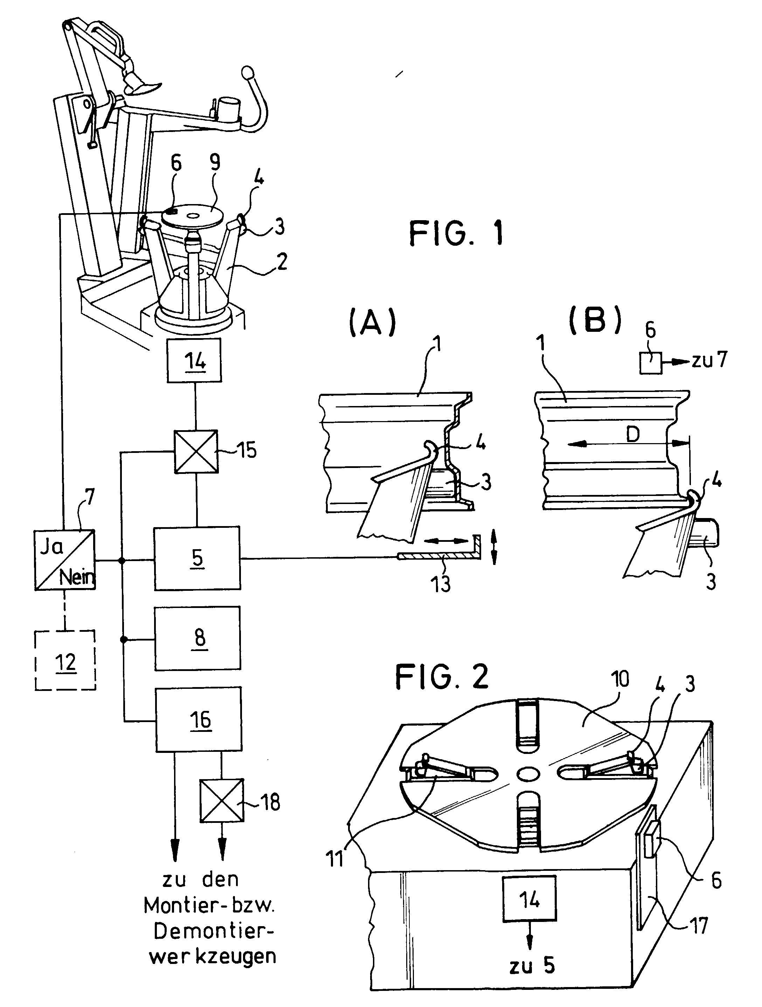

In den beiden Ausführungsbeispielen sind von einer Reifenmontiermaschine die Mittel zum Befestigen eines Scheibenrades 1 bzw. eines montierten, aus Scheibenrad und darauf aufgezogenen Luftreifen bestehenden Kraftfahrzeugrades an der Reifenmontiermaschine dargestellt. Diese Mittel bestehen aus Spannelementen 3 in Form von Spannbacken, welche an die Felgeninnenfläche des Scheibenrades andrückbar sind. Ferner sind Spannelemente 4 vorgesehen, welche in Form von Spannklauen von außen an einem der Felgenhörner des Scheibenrades 1 angreifen. Das Spannen von innen ist in der Fig. 1 (A) und das Spannen von außen in der Fig. 1 (B) für jeweils ein Spannelement schematisch dargestellt. Beide Spannelemente 3 und 4 befinden sich im Ausführungsbeispiel der Fig. 1 an Spannarmen 2, welche zum Aufspannen eine Spreizbewegung ausführen. Beim Ausführungsbeispiel der Fig. 2 befinden sich die Spannelemente 3 und 4 an Spannschuhen 11, welche in radialer Richtung an einem Spannteller 10 verschoben werden.

Wie in den Figuren 1(A) und (B) schematisch dargestellt ist, kann in die Nähe des Scheibenrades ein Sensor 6 gebracht werden, der auf das Material des Scheibenrades anspricht. Die Ankoppelung des Sensors an das Scheibenradmaterial kann galvanisch, induktiv oder kapazitiv erfolgen. In Abhängigkeit vom Scheibenradmaterial liefert der Sensor 6 ein elektrisches Signal, welches in einer Logikschaltung 7 ausgewertet wird.

In bevorzugter Weise wird beim dargestellten Ausführungsbeispiel ein auf ferromagnetisches Material ansprechender Sensor verwendet. In der Logikschaltung 7 erfolgt eine Ja/Nein-Auswertung des vom Sensor 6 gelieferten Materials. Der Sensor 6 kann hierzu bevorzugt als ein induktiver Näherungsschalter ausgebildet sein. Wenn das Scheibenrad 1 aus einem ferrromagnetischen Material insbesondere Stahl besteht, ist es nicht erforderlich, daß bei der Handhabung des Scheibenrades zusätzliche materialschonende Maßnahmen beim Spannvorgang ergriffen werden. Es ist daher nicht erforderlich, daß der Serviceperson durch eine besondere optische oder akustische Anzeige angezeigt wird, daß eine Stahlfelge aufgespannt werden soll. Eine derartige insbesondere optische Anzeige kann jedoch vorgesehen sein. Diese Anzeige kann, wie in Fig. 1 in strichlierten Linien dargestellt ist, durch eine zweite Anzeigeeinrichtung 12 erfolgen.

Wenn der Sensor 6 ein nicht-ferromagnetisches Material feststellt, wird von der Logikschaltung 7 eine erste Anzeigeeinrichtung 8, welche ein optisches und/oder akustisches Signal gibt, betätigt. Diese Anzeige ist für die Serviceperson ein Hinweis, daß der Spannvorgang materialschonend durchgeführt werden muß. Beispielsweise ist dann zu überprüfen, ob an den Spannelementen insbesondere an den von außen angreifenden Spannelementen 4 Schutzkappen oder Schutzüberzüge vorhanden sind. Falls eine oder mehrere der Schutzüberzüge defekt sind, veranlaßt die von der ersten Anzeigeeinrichtung 8 gegebene Anzeige die Serviceperson, diese auszutauschen.

Gleichzeitig kann eine Steuereinrichtung 5 durch die Logikschaltung 7 betätigt werden dahingehend, daß in Abhängigkeit vom ermittelten Durchmesser D der Radfelge, insbesondere im Bereich der Felgenhörner, die Spannarme 2 bzw. Spannschuhe 11 so weit bewegt werden, daß sie von außen am Felgenhorn bzw. unten liegenden Felgenhorn des Scheibenrades 1 angreifen wie es in Fig. 1 (B) dargestellt ist. Der Scheibenraddurchmesser D kann mit Hilfe einer Abtasteinrichtung 13, mit welcher die geometrischen Raddaten berührungslos oder mit berührenden Tastelementen bestimmt werden, ermittelt werden. Die Abtasteinrichtung 13 ist hierzu mit der Steuereinrichtung 5 verbunden. Die Steuereinrichtung 5 führt einen Vergleich durch und steuert einen Antrieb 14 der Spannarme 2 bzw. der Spannschuhe 11 so, daß (wie schon erläutert) die Spannelemente 4 von außen an dem Scheibenrad 1 angreifen. Es wird hierdurch verhindert, daß eine Aufspannung des Scheibenrades 1 von innen erfolgt.

Der Sensor 6 kann so vorgesehen sein, daß er von Hand in die Nähe des Scheibenrades oder in Anlage an das Scheibenrad gebracht werden kann. Es ist jedoch auch möglich, den Sensor 6 an der Halteeinrichtung (Halteteller) 9 des Ausführungsbeispiels nach Fig. 1 bzw. am Spannteller 10 des Ausführungsbeispiels nach Fig. 2 vorzusehen. Die Steuerung des Antriebs 14 der Spannarme 2 bzw. der Spannschuhe 11 erfolgt so, daß erst die Materialbestimmung durch den Sensor 6 durchgeführt wird. Solange die Abtastung des aufzuspannenden Scheibenrades 1 noch nicht vollendet ist, bleibt der Antrieb 14 für die Spannarme 2 bzw. die Spannschuhe 11 blockiert. Diese Blockierung wird erst dann freigegeben, wenn das Abtastergebnis des Sensors 6 vorliegt und in die Logikschaltung 7 eingegeben worden ist und wenn die Logikschaltung 7 aufgrund einer Ja/Nein-Entscheidung bestimmt hat, ob das Scheibenrad 1 aus ferromagnetischem Material insbesondere Stahl oder nicht-ferromagnetischem Material, d.h. aus Aluminium, besteht. Durch die Logikschaltung 7 wird hierzu eine Blockiereinrichtung 15 des Antriebs 14 gelöst. Die erste Steuereinrichtung 5 kann dann in Abhängigkeit der Information der Logikschaltung 7 die Spannarme 2 bzw. die Spannschuhe 11 für die richtige Bewegung ansteuern.

Bei der Erfindung reicht es aus, einen Sensor 6 zu verwenden, der nur auf ferromagnetisches Material anspricht, beispielsweise einen induktiven Näherungsschalter bekannter Ausführungsform. In Kombination mit der Logikschaltung 7, welche eine Ja/Nein-Entscheidung durchführt, kann dann ein materialspezifisches elektrisches Signal gewonnen werden, durch welches für die Serviceperson eine Anzeige gebildet werden kann, die angibt, ob ein Standardspannvorgang für ein Stahl-Rad oder ein materialschonender Spannvorgang für ein Aluminium-Rad durchgeführt werden muß.

In bevorzugter Weise kann das aufzuspannende Scheibenrad vor seiner endgültigen Befestigung durch die Spannelemente auf der Halteeinrichtung 9 (Halteteller) im Ausführungsbeispiel der Fig. 1 oder den Spannteller 10 beim Ausführungsbeispiel der Fig. 2 aufgelegt werden und mittels einer durch die Zentrierbohrung gesteckte Schraubverbindung vormontiert werden. Durch den im Bereich der Halteeinrichtung 9 (Halteteller) bzw. im Bereich des Spanntellers 10 vorgesehenen Sensor 6 erfolgt dann die Materialabtastung des Scheibenrades.

Die Materialabtastung kann in bevorzugter Weise vor dem Abdrücken der Reifenwülste von den Felgenhörnern erfolgen. Hierzu kann der Sensor 6 vor dem Aufspannen bzw. vor dem Befestigen des Scheibenrades an der Reifenmontiermaschine an das Scheibenrad herangeführt werden und die Materialabtastung durchgeführt werden. Ferner kann hierzu der Sensor 6 im Bereich einer Anlagefläche 17 an der Außenseite des Gehäuses der Reifenmontiermaschine (Ausführungsform der Fig. 2) vorgesehen sein. An diese Anlagefläche wird beim Abdrücken der Reifenwülste von den Felgenhörnern das Rad angelegt.

Die Materialabtastung des Scheibenrades kann auch für den nachfolgenden Montiervorgang, bei welchem ein Luftreifen auf das Scheibenrad aufgezogen wird oder bei einem Demontiervorgang, bei welchem der Luftreifen vom Scheibenrad abgezogen wird, ausgenützt werden. In Abhängigkeit von der Materialerkennung des Sensors 6 können dann entsprechende Werkzeuge für das Montieren und Demontieren des Reifens mittels einer zweiten an die Logikschaltung 7 angeschlossenen Steuereinrichtung 16 angesteuert werden. Diese Ansteuerung kann derart sein, daß Montier- bzw. Demontierwerkzeuge, welche für Stahlfelgen bestimmt sind, für eine Betätigung mittels einer zweiten Blokkiereinrichtung 18 dann blockiert sind, wenn ein Leichtmetallrad eingespannt ist, so daß nur die materialschonenden Montier- und Demontierwerkzeuge zum Einsatz gebracht werden können. Die zweite Blockiereinrichtung 18 kann beispielsweise nicht näher dargestellte Ventile, welche zur pneumatischen Betätigung der Werkzeuge bei Stahlfelgen zum Einsatz gebracht werden, sperren. Diese Betätigungsblockierung wird gelöst, wenn vom Sensor 6 eine Stahlfelge festgestellt wird.

## Patentansprüche

1. Verfahren zum Behandeln des Scheibenrades (1) eines Kraftfahrzeugrades an einer Reifenmontiermaschine, bei dem das Scheibenrad (1) mit Hilfe von Spannelementen (3 bzw. 4) festgespannt wird,
**dadurch gekennzeichnet,**
daß das Scheibenrad (1) vor dem Festspannen mittels eines auf das Scheibenradmaterial, insbesondere auf ein ferromagnetisches Material ansprechenden Sensors (6) abgetastet wird und im Falle eines nicht-ferromagnetischen Materials ein Signal für einen materialschonenden Spannvorgang bzw. Montier- bzw. Demontiervorgang eines Luftreifens durch einen von dem Sensor (6) angesteuerten Signalgeber abgegeben wird.

2. Verfahren nach Anspruch 1, dadurch gekennzeichnet, daß durch das Signal eine Anzeige, insbesondere in optischer und/oder akustischer Form ausgelöst wird.

3. Verfahren nach Anspruch 1 oder 2, dadurch gekennzeichnet, daß durch das Signal bei Maschinen, welche eine Felge von innen und außen spannen, der Spannvorgang von innen blockiert wird.

4. Verfahren nach einem der Ansprüche 1 bis 3, dadurch gekennzeichnet, daß die Abmessungen des Scheibenrades (1), insbesondere der Durchmesser der Felgenhörner gemessen wird.

5. Verfahren nach einem der Ansprüche 1 bis 4, dadurch gekennzeichnet, daß durch das Signal die Spannelemente (3 bzw. 4), zu einem den Felgenhörnern des Scheibenrades entsprechenden Radius, bewegt werden.

6. Verfahren nach einem der Ansprüche 1 bis 5, dadurch gekennzeichnet, daß das Scheibenrad (1) vor dem Spannen an einer Halteeinrichtung (9) abgestützt wird.

7. Verfahren nach einem der Ansprüche 1 bis 6, dadurch gekennzeichnet, daß das in der Halteeinrichtung (9) abgestützte Scheibenrad (1) vor dem Spannen abgetastet wird.

8. Verfahren nach Anspruch 7, dadurch gekennzeichnet, daß die Materialabtastung des Scheibenrades vor dem Abdrücken der Reifenwülste von den Felgenhörnern durchgeführt wird.

9. Verfahren nach Anspruch 7 oder 8, dadurch gekennzeichnet, daß beim Abtasten eines nicht-ferromagnetischen Materials die Montier- bzw. Demontierwerkzeuge für die Behandlung von Stahlrädern blockiert werden.

10. Verfahren nach einem der Ansprüche 1 bis 9, dadurch gekennzeichnet, daß das auf das Material bezogene Signal für die Auswahl eines Ausgleichsprogrammes in eine Auswuchtmaschinenelektronik für den anschließenden Auswuchtvorgang zugeführt wird.

11. Vorrichtung zum Behandeln eines Scheibenrades (1) eines Kraftfahrzeugrades an einer Reifenmontiermaschine mit Spannelementen, die mit dem Scheibenrad (1) in Eingriff bewegbar sind,
**dadurch gekennzeichnet,**
daß ein vor der Bewegungsinitiierung der Spannelemente (3 bzw. 4) betätigter, auf ein ferromagnetisches Material ansprechbarer Sensor (6) mit dem Scheibenradmaterial koppelbar ist.

12. Vorrichtung nach Anspruch 11, dadurch gekennzeichnet, daß der Sensor (6) mit dem Scheibenradmaterial galvanisch, kapazivit oder induktiv koppelbar ist.

13. Vorrichtung nach Anspruch 11 oder 12, dadurch gekennzeichnet, daß mit dem Sensor (6) eine Logikschaltung (7) verbunden ist, die eine Ja/Nein-Entscheidung durchführt und in Abhängigkeit von der Entscheidung eine Anzeigeeinrichtung (8) für einen materialschonenden Spannvorgang und/oder Montier- bzw. Demontiervorgang ansteuert.

14. Vorrichtung nach Anspruch 13, dadurch gekennzeichnet, daß durch die Logikschaltung (7) eine Blockiereinrichtung (15) für einen Antrieb (14) der Spannelemente (3 bzw. 4) lösbar ist.

15. Vorrichtung nach Anspruch 14, dadurch gekennzeichnet, daß mit der Logikschaltung (7) eine erste Steuereinrichtung (5) für den Antrieb (14) der Spannelemente (3 bzw. 4) verbunden ist.

16. Vorrichtung nach Anspruch 15, dadurch gekennzeichnet, daß mit der ersten Steuereinrichtung (5) ferner eine Abstasteinrichtung (13) zum Abtasten der geometrischen Daten des Scheibenrades (1) verbunden ist.

17. Vorrichtung nach Anspruch 15 oder 16, dadurch gekennzeichnet, daß an die Logikschaltung (7) ferner eine zweite Steuereinrichtung (16) zur Betätigung der Montier- bzw. Demontierwerkzeuge angeschlossen ist.

18. Vorrichtung nach Anspruch 17, dadurch gekennzeichnet, daß die Montier- bzw. Demontierwerkzeuge für die Behandlung von Stahlrädern bei einem nicht-ferromagnetischen Scheibenradmaterial gegen Betätigung blockiert sind.

19. Vorrichtung nach einem der Ansprüche 11 bis 18, dadurch gekennzeichnet, daß der Sensor (6) an einer Halteeinrichtung (9) zum Vormontieren des Scheibenrades (1) vorgesehen ist.

20. Vorrichtung nach einem der Ansprüche 11 bis 19, dadurch gekennzeichnet, daß der Sensor (6) im Bereich einer Anlagefläche (17) zum Abdrücken der Reifenwülste von den Felgenhörnern an der Außenfläche der Reifenmontiermaschine angeordnet ist.

## Claims

1. A method of handling the disc wheel (1) of a motor vehicle wheel on a tyre fitting machine, wherein the disc wheel (1) is clamped fast by means of clamping elements (3 and 4 respectively), characterised in that prior to the operation of clamping the disc wheel (1) fast, the disc wheel (1) is sensed by means of a sensor (6) which is responsive to the disc wheel material and in particular to a ferromagnetic material and, in the case of a non-ferromagnetic material, a signal for a material-protecting clamping procedure or pneumatic tyre fitting or removing procedure is outputted by a signal generator which is actuated by the sensor (6).

2. A method according to claim 1 characterised in that a display, in particular in optical and/or acoustic form, is triggered by the signal.

3. A method according to claim 1 or claim 2 characterised in that in machines which clamp a wheel rim from the inside and the outside, the clamping procedure from the inside is blocked by the signal.

4. A method according to claims 1 to 3 characterised in that the dimensions of the disc wheel (1), in particular the diameter of the rim flanges, is measured.

5. A method according to one of claims 1 to 4 characterised in that the clamping elements (3 and 4 respectively) are moved by the signal to a radius corresponding to the rim flanges of the disc wheel.

6. A method according to one of claims 1 to 5 characterised in that the disc wheel (1) is supported prior to the clamping operation on a holding device (9).

7. A method according to one of claims 1 to 6 characterised in that the disc wheel (1) which is supported in the holding device (9) is sensed prior to the clamping operation.

8. A method according to claim 7 characterised in that the operation of sensing the material of the disc wheel is effected before the tyre beads are pressed off the rim flanges.

9. A method according to claim 7 or claim 8 characterised in that, when sensing a non-ferromagnetic material, the fitting and removing tools for the handling of steel wheels are blocked.

10. A method according to one of claims 1 to 9 characterised in that the signal which is related to the material, for the selection of a balancing program, is fed into an electronic balancing machine system for the subsequent balancing procedure.

11. Apparatus for handling a disc wheel (1) of a motor vehicle wheel on a tyre fitting machine having clamping elements which are movable into engagement with the disc wheel (1), characterised in that a sensor (6) which is actuated by the initiation of movement of the clamping elements (3 and 4 respectively) and which is responsive to a ferromagnetic material can be coupled to the disc wheel material.

12. Apparatus according to claim 11 characterised in that the sensor (6) can be galvanically, capacitively or inductively coupled to the disc wheel material.

13. Apparatus according to claim 11 or claim 12 characterised in that connected to the sensor (6) is a logic circuit (7) which implements a yes/no decision and which in dependence on the decision actuates a display device (8) for a material-protecting clamping procedure and/or fitting or removal procedure.

14. Apparatus according to claim 13 characterised in that a blocking device (15) for a drive (14) of the clamping elements (3 and 4 respectively) can be released by the logic circuit (7).

15. Apparatus according to claim 14 characterised in that a first control device (5) for the drive (14) of the clamping elements (3 and 4 respectively) is connected to the logic circuit (7).

16. Apparatus according to claim 15 characterised in that a sensing device (13) for sensing the geometrical data of the disc wheel (1) is also connected to the first control device (5).

17. Apparatus according to claim 15 or claim 16 characterised in that a second control device (16) for actuation of the fitting or removal tools is also connected to the logic circuit (7).

18. Apparatus according to claim 17 characterised in that when dealing with a non-ferromagnetic disc wheel material, the fitting and removal tools for handling steel wheels are blocked to prevent actuation thereof.

19. Apparatus according to one of claims 11 to 18 characterised in that the sensor (6) is provided on a holding device (9) for preliminary mounting of the disc wheel (1).

20. Apparatus according to one of claims 11 to 19 characterised in that the sensor (6) is arranged in the region of a contact surface (17) for pressing the tyre beads off the wheel rim flanges at the outside surface of the tyre fitting machine.

## Revendications

1. Procédé pour manipuler la roue (1) à disque d'une roue de véhicule automobile sur un dispositif de montage de pneumatiques, dans lequel la roue (1) à disque est bloquée à l'aide d'éléments (3 ou 4) de serrage, caractérisé en ce que la roue (1) à disque est analysée avant le blocage au moyen d'un détecteur (6) réagissant au matériau de la roue à disque, notamment à un matériau ferromagnétique, et en ce que, dans le cas d'un matériau non ferromagnétique, il est fourni un signal pour une opération de serrage ménageant le matériau ou pour une opération de montage et/ou démontage d'un pneumatique par un générateur de signaux commandé par le détecteur (6).

2. Procédé suivant la revendication 1, caractérisé en ce qu'il est déclenché par le signal une signalisation, notamment sous forme optique et/ou acoustique.

3. Procédé suivant la revendication 1 ou 2, caractérisé en ce que l'opération de serrage de l'intérieur est bloquée par le signal pour des machines qui serrent une jante de l'intérieur et de l'extérieur.

4. Procédé suivant l'une des revendications 1 à 3, caractérisé en ce que les mesures de la roue (1) à disque, notamment le diamètre des rebords de jante, est mesuré.

5. Procédé suivant l'une des revendications 1 à 4, caractérisé en ce que les éléments (3 et 4) de serrage sont déplacés par le signal par rapport à un rayon correspondant au rebord de jante de la roue à disque.

6. Procédé suivant l'une des revendications 1 à 5, caractérisé en ce que la roue (1) à disque est soutenue sur un dispositif (9) de maintien avant le serrage.

7. Procédé suivant l'une des revendications 1 à 6, caractérisé en ce que la roue (1) à disque soutenue dans le dispositif (9) de maintien est analysée avant le serrage.

8. Procédé suivant la revendication 7, caractérisé en ce que l'analyse du matériau de la roue à disque est effectuée avant le déjantage du pneumatique des rebords de jante.

9. Procédé suivant la revendication 7 ou 8, caractérisé en ce que, en cas de détection d'un matériau non ferromagnétique, les outils de montage et/ou de démontage pour la manipulation de roues en acier sont bloqués.

10. Procédé suivant l'une des revendications 1 à 9, caractérisé en ce que le signal se rapportant au matériau est envoyé, pour la sélection d'un programme d'équilibrage, à une électronique d'équilibreuse pour l'opération d'équilibrage qui suit.

11. Dispositif pour manipuler une roue (1) à disque d'une roue de véhicule automobile sur un dispositif de montage de pneumatiques à éléments de serrage qui peuvent être mis en prise avec la roue (1) à disque, caractérisé en ce qu'un détecteur (6), actionné avant l'initiation du déplacement des éléments (3 et 4) de serrage, répondant à un matériau ferromagnétique, peut être couplé au matériau de la roue à disque.

12. Dispositif suivant la revendication 11, caractérisé en ce que le détecteur (6) peut être couplé au matériau de la roue à disque de manière galvanique, capacitive ou inductive.

13. Dispositif suivant la revendication 11 ou 12, caractérisé en ce qu'il est relié au détecteur (6) un circuit (7) logique qui prend une décision Oui/Non et qui, en fonction de la décision, commande un dispositif (8) de signalisation pour une opération de serrage et/ou une opération de montage et/ou de démontage ménageant le matériau.

14. Dispositif suivant la revendication 13, caractérisé en ce qu'il peut être déclenché par le circuit (7) logique un dispositif (15) de blocage pour un dispositif (14) d'entraînement des éléments (3 et 4) de serrage.

15. Dispositif suivant la revendication 14, caractérisé en ce qu'il est relié au circuit (7) logique un premier dispositif (5) de commande pour le dispositif (14) d'entraînement des éléments (3 et 4) de serrage.

16. Dispositif suivant la revendication 15, caractérisé en ce qu'il est relié au premier dispositif (5) de commande de plus un dispositif (13) de détection pour détecter les données géométriques de la roue (1) à disque.

17. Dispositif suivant la revendication 15 ou 16, caractérisé en ce qu'il est raccordé au circuit (7) logique de plus un deuxième dispositif (16) de commande pour actionner les outils de montage et/ou démontage.

18. Dispositif suivant la revendication 17, caractérisé en ce que les outils de montage et/ou démontage pour la manipulation de roues en acier sont bloqués à l'encontre de tout actionnement dans le cas d'un matériau de roue à disque non ferromagnétique.

19. Dispositif suivant l'une des revendications 11 à 18, caractérisé en ce que le détecteur (6) est prévu sur un dispositif (9) de maintien servant au prémontage de la roue (1) à disque.

20. Dispositif suivant l'une des revendications 11 à 19, caractérisé en ce que le détecteur (6) est monté dans la zone d'une surface (17) d'application pour le déjantage du pneumatique des rebords de la jante sur la surface extérieure du dispositif de montage de pneumatiques.
